# EUROPÄISCHE PATENTSCHRIFT

(11) **EP 0 716 991 B1**
(45) Veröffentlichungstag und Bekanntmachung des Hinweises auf die Patenterteilung: **23.06.1999**
(21) Anmeldenummer: 95119519.7
(22) Anmeldetag: 12.12.1995
(51) Int. Cl.: B65G 43/00

(54) **Verfahren und Anordnung zur Überwachung eines Fördergurtes**
Method and device for monitoring a conveyor belt
Procédé et dispositif pour surveiller une courroie de convoyeur

(30) Priorität: 13.12.1994 DE 4444263
(43) Veröffentlichungstag der Anmeldung: 19.06.1996
(73) Patentinhaber: Continental Aktiengesellschaft, 30165 Hannover (DE)
(72) Erfinder: Alles, Rainer, Dr., D-30916 Isernhagen (DE)

(56) Entgegenhaltungen:
- EP-A- 0 505 905
- DE-A- 2 404 769
- DE-A- 3 711 237
- DE-A- 4 243 021
- DE-B- 1 274 499
- SOVIET INVENTIONS ILLUSTRATED Section PQ, Week 8340 16.November 1983 Derwent Publications Ltd., London, GB; Class Q35, AN 83-781207 & SU-A-977 320 (DNEPR MINE AUTOMAT) , 30.November 1982
- PATENT ABSTRACTS OF JAPAN vol. 14 no. 482 (P-1119) ,19.Oktober 1990 & JP-A-02 195288 (FURUKAWA ELECTRIC CO) 1.August 1990,
- "REAL BELTERS", Coal News, June 1993, Page 17.

## Beschreibung

Die Erfindung betrifft ein Verfahren zur induktiven Überwachung eines Fördergurtes gemäß dem Oberbegriff des Anspruchs 1. Die Erfindung betrifft ferner eine Überwachungsanordnung an einem Fördergurt gemäß dem Oberbegriff des Anspruchs 2.

Bei den großen Bandstraßen mit breiten, endlos umlaufenden Fördergurten stellen solche Gurte aus nichtmetallischem Werkstoff, wie sie insbesondere zum Transport von Schüttgut benutzt werden, einen großen Wert dar. Dabei ist es von besonderer Bedeutung, laufend über diverse Zustandsgrößen und sonstige Daten, die den Gurt betreffen, wie z. B. Temperatur, Zugspannung, Beladungszustand, Anzahl der Umläufe usw. informiert zu werden.

Zur Steuerung von Bändern hat man versucht, mit Hilfe von Lochmarkierungen in Verbindung mit Lichtschranken eine Positionierung von Bandabschnitten vorzugeben. Auch hat man versucht, mittels einer auf den Fördergurt angebrachten Magnetspur nach Art eines Tonbandes eine Steuerspur zur Verfügung zu haben. Eine derartige Magnetspur ist zwar in der Lage, eine große Anzahl von Informationen zu speichern und mittels eines einem Tonkopf entsprechenden Abtastkopfes abfragbar bereitzuhalten. Auch kann die Magnetspur gelöscht, beziehungsweise wieder "überspielt" werden. Es hat sich jedoch gezeigt, daß eine derartige Magnetspurtechnik für den rauhen Betrieb, wie sie bei Fördergurten für den Transport von Schüttgut gegeben ist, weniger geeignet ist. Unter den starken Beanspruchungen ergeben sich in den Gurten sowohl Längsals auch Höhenschwingungen der Gurte, wodurch ein zuverlässiger Band/Kopf-Kontakt nicht gewährleistet ist. Zudem führen die Längschwingungen zu Verfälschungen der abzutastenden Daten. Bei Änderung der Bandlaufgeschwindigkeit werden die abzutastenden Daten unbrauchbar; bei Stillstand des Bandes lassen sich gar keine Daten mehr abtasten. Auch verfügt die Magnetspur des Bandes über keinerlei Sensorik zur Bestimmung von überwachungsdaten, wie z. B. Temperatur, Druck, Bandgeschwindigkeit usw. und auch keine zu deren Auswertung erforderliche "Intelligenz".

Die DE-AS 12 74 499 beschreibt eine überwachungseinrichtung für Fördergurte mit auf dem Gurt mitgeführten Sendern. Diese Sender können von ortsfesten Einrichtungen induktiv mit Energie versorgt werden. Diese überwachungseinrichtungen sind ausschließlich für die Warnung vor Längsrissen geeignet. Zu diesem Zweck sind zwischen den für die Spannungsversorgung vorgesehenen Induktionsspulen und den Sendern Leiterschleifen angebracht. Wird nun durch einen Gurtriß die entsprechende Leiterschleife zerstört, so wird die Stromversorgung zum Sender unterbrochen und der Sender ist nicht mehr sendebereit. Dies wird als Defekt im Fördergurt gedeutet. Die Position des Defekts läßt sich so nicht bestimmen. Der jeweilige Sender hat weder eine individuelle Kennung, noch verfügt er über einen programmierbaren Speicher. Temperaturfühler und dergleichen sind ebenfalls nicht vorhanden.

Die Verwendung von Tranponderchips zur berührungslosen, induktiven übertragung von Daten ist ebenfalls bekannt. Durch die Verwendung von Transpondern haben sich auf den verschiedensten Anwendungsgebieten neue Möglichkeiten zur überwachung von Arbeitsprozessen und sonstigen Vorgängen erschlossen.

So beschreibt z. B. die DE-OS 37 11 237 ein Verfahren zur Steuerung von Stückgutförderanlagen, das dadurch zu charakterisieren ist, daß man die für die Beförderung von Stückgut vorgesehenen Transportbehälter mit abfragbaren Transpondern versieht. Da lediglich die Transportbehälter mit Transpondern versehen sind, der Fördergurt jedoch nicht, ist es so nicht möglich, die jeweilige Bandposition anzugeben. Für Massengut, wie z. B. Schüttgut, ist dies Verfahren deshalb nicht geeignet. Auch verfügt der beschriebene Transponder über keinerlei Sensorik zur Bestimmung von gurtspezifischen Daten.

Ferner ist die Verwendung von Transpondern als Markierung von zu transportierenden Reifen bekannt (DE 42 43 021 A1). Zu diesem Zweck werden die Reifen statt mit Balkenkennzeichnungen entweder lose mit Transponderchips versehen oder die Transponder werden in den Gummi einvulkanisiert. Auch dieses Verfahren gibt keine Auskunft über (gurt)spezifische Daten, auch sind keinerlei Sensoren für die Erfassung von sonstigen Meßgrößen beschrieben.

Nach der EP 05 05 905 werden derartige Transponderchips ebenfalls in die Reifen einvulkanisiert.

Die Aufgabe der Erfindung besteht darin, den Fördergurt mit einem "intelligenten" System zu versehen, welches dem Betreiber des Gurtes die verschiedensten Meß- und Speicherdaten, wie z. B. Bandnummer und Meterzahl, aber auch die Erfassung von Betriebszuständen, wie z. B. Anzahl der Umläufe, ferner Verschleiß-, Temperatur- und Verbindungsüberwachungsdaten zur Auswertung zukommen läßt.

Die Aufgabe wird durch die kennzeichnenden Merkmale des Anspruchs 1 bzw. durch die kennzeichnenden Merkmale des Anspruchs 2 gelöst.

Aus dem Artikel 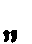 Real Belters" aus der Zeitschrift 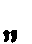 Coal News", Ausgabe Juni 1993 ist zwar ein Fördergurt mit einem eingebetteten Transponder bekannt, der eine Kennung an eine Sende-/Empfangseinrichtung übermittelt, jedoch geht aus diesem Artikel nicht hervor, wie mit Hilfe des Transponders der Fördergurt überwacht werden könnte.

Die auf dem Fördergurt angeordneten Sender sind Transponderchips mit integrierten miniaturisierten Datencodeträgern, denen jeweils eine individuelle Kennung fest einprogrammiert ist. Diese Kennung wird während des Sendevorgangs mit ausgestrahlt. Dadurch ist es während des Betriebs möglich, anhand der jeweiligen Kennung die Position des jeweiligen Senders festzustellen.

Die Transponder senden die mit ihrer Kennung versehenen Signale auf der Frequenz der empfangenen Leistung. Auf diese Weise werden gesonderte Sende- und Empfangskanäle mit dazugehörigen Antennen eingespart.

Es ist aber nicht nur die genaue Position auf dem Gurt anhand der individuellen Kennung angebbar.
Die Transponderchips verfügen erfindungsgemäß zusützlish über E²PROM-Speicher, in denen außer ihrer jeweils individuell einprogrammierten Kennung weitere, löschbare Informationen speicher- und abfragbar sind. Hier können z. B. bei Fördergurten für Stückgut Informationen bezüglich Menge, Be- und Entladeposition usw. eingegeben und später wieder abgefragt werden.

Darüber hinaus werden Transponderchips vorgeschlagen, in denen weitere Einheiten, wie z. B. Temperaturbewertungseinheit mit Temperatursensor, Druckbewertungseinheit mit Drucksensor für die Messung von Temperatur, Spannungs- und Beladungszuständen am Gurt enthalten sind. Auch diese Sensordaten können von der ortsfesten Sende- und Empfangseinrichtung abgefragt bzw. in regelmäßigen Abständen zu ihr übermittelt werden. Es ist vorteilhaft, wenn man in der Auswertezentrale über derartige weitere Daten bezüglich des Fördergurts Kenntnis hat. So können insbesonder bei überschreiten von vorgegebenen Grenzwerten Maßnahmen zur Vorbeugung von Schäden eingeleitet werden.

Aber auch die Sende- und Empfangseinrichtung kann mit entsprechenden Sensoren kombiniert werden.

Im folgenden wird die Erfindung anhand eines Ausführungsbeispiels näher beschrieben. Es zeigt:

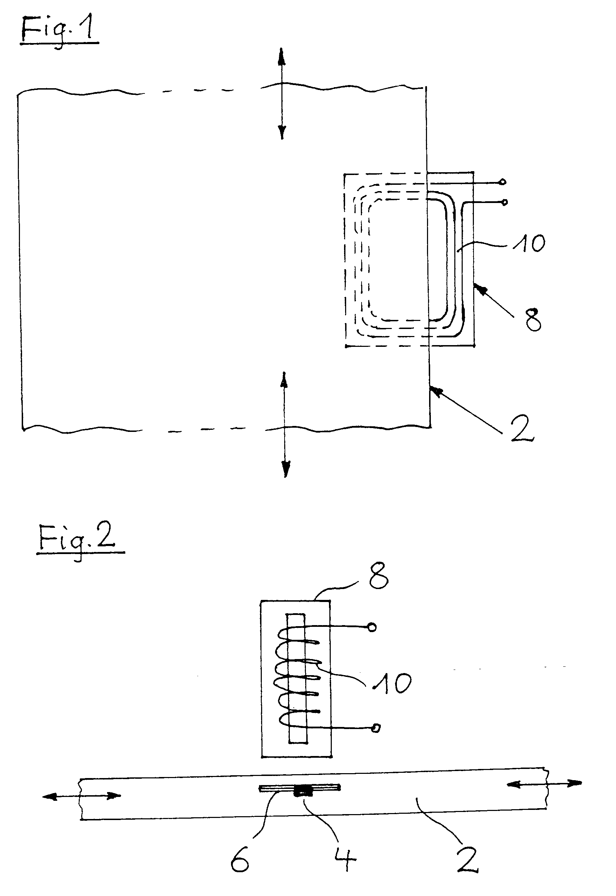

Fig. 1 eine Draufsicht auf einen Fördergurt mit einer darunter befindlichen, ortsfesten Sende- und Empfangseinrichtung, (bzw. einem mobilen Handgerät);
Fig. 2 einen Fördergurt in Seitenansicht mit einer darüber befindlichen Sende- und Empfangseinrichtung;
Fig. 3a, 3b Datenträgerspulen mit daran angeschlossenen Sendern;
Fig. 4 die Verteilung der Sender auf einem Fördergurt;
Fig. 5 eine Draufsicht auf einen Fördergurt mit eingelegten Datenträgerspulen nebst Sendern;
Wesentlicher Bestandteil der Anordnung zur überwachung eines Fördergurtes 2 sind in den Gurt 2 eingelegte Sender 4.

Die Sender 4 sind jeweils an eine als Antenne wirkende sogenannte Datenträgerspule 6 angeschlossen. Sowohl die Sender 4 als auch die daran befestigten Datenträgerspulen 6 sind hitzefest und in einem gemeinsamen Gehäuse untergebracht. Dieses gemeinsame Gehäuse kann die Größe einer 10-Pfennig-Münze oder die Größe und Flexibilität einer Scheckkarte aufweisen. Wegen der Hitzebeständigkeit können die aus Sender 4 und Datenträgerspule 6 bestehenden Einheiten bereits bei der Herstellung von Fördergurten 2 in den Gummi einvulkanisiert werden.

Die Sender 4 erhalten ihre Spannungs- bzw. Stromversorgung durch induktive Kopplung an eine als Primärspule wirkende, fortlaufend erregte Wicklung 10 der außerhalb des Gurtes 2 ortsfest angebrachten Sende- und Empfangseinrichtung 8, wobei die Datenträgerspule 6 als Sekundärspule dient.

Die Anzahl der Windungen der Datenträgerspulen 6 und der Wicklung 10 der Sende- und Empfangseinrichtung 8 sind so gewählt und so zueinander ins Verhältnis gesetzt, daß eine optimale Anpassung an die Eingangsimpedanz des Senders 4 gewährleistet ist.

Die auf dem Fördergurt 2 mitbewegten Sender 4 sind Transponderchips mit integrierten miniaturisierten Datencodeträgern, in denen individuelle Kennungen einprogrammiert sind. Diese Transponderchips geben ein Signal mit der jeweils individuellen Kennung solange ab, wie sie mit Strom versorgt werden, d. h. solange wie sich ihre Datenträgerspule 6 im Bereich der ortsfesten Sende und Empfangseinrichtung 8 befindet.

Das Signal, welches der Transponderchip 4 abgibt, gelangt auf dem gleichen Weg - nur in umgekehrter Richtung - an die ortsfeste Sende- und Empfangseinrichtung 8. Dabei wird das Datensignal der Amplitude des Energieflusses aufmoduliert. Als Frequenz der zu übertragenden Energie hat sich 130 kHz als vorteilhaft erwiesen. Aber auch andere Frequenzen sind denkbar.

Um den Einfluß von Streustrahlung zu vermeiden, kann die Reichweite der ortsfesten Sende- und Empfangseinrichtung 8 so gewählt werden, daß eine induktive Stromversorgung der auf dem Gurt 2 mitbewegten Sender 4 nur dann erfolgt, wenn sich die jeweilige Datenträgerspule 6 in unmittelbarer Nähe über der Sende- und Empfangseinrichtung 8 befindet. Befindet sich nämlich eine Datenträgerspule 6 direkt ober- oder unterhalb der ortsfesten Sende- und Empfangseinrichtung 8, so wird von der ortsfesten Wicklung 10 ein Sekundärstrom in der Datenträgerspule 6 induziert, der den daran angeschlossenen Sender 4 mit Energie versorgt.

Damit ist eine berührungslose induktive Verbindung zwischen Datenträgerspule 6 und ortsfester Einrichtung 8 sowohl bezüglich der Energieversorgung des Senders 4 als auch bezüglich des Datentransfers vom beweglichen Sendern 4 zur ortsfesten Einrichtung 8 gegeben.

Die Reichweite der Sender 4 ist nicht nur von der Leistung der ortsfesten Einrichtung 8 abhängig sondern kann auch durch geeignete Auswahl der Größe der Datenträgerspule 6 an die Erfordernisse angepaßt werden.

Anhand der individuellen Kennungen der Transponderchips kann die Position der jeweiligen Chips auf dem Gurt 2 genau angegeben werden.

Eine weitere Ausführungsform ist mit dem Anbringen von Transponderchips 4 in unterschiedlichen Bereichen des Fördergurtes 2 gegeben, wobei die Transponderchips in unterschiedliche Tiefen unter die Laufoberfläche des Fördergurtes 2 implantiert sind. Aufgrund der geringen Abmessungen eines Transponderchips als Sender 4 einschließlich der zur Energie- und Signalübertragung dienenden Datenträgerspule 6 kann eine überwachung des Gurtes 2, insbesondere Verschleißüberwachung, dadurch erfolgen, daß das Vorhandensein eines Chips 4 an einer definierten Stelle überwacht wird. Wird kein Signal zurückgesendet, dann ist der Transponder 4 infolge fortgeschrittenen Verschleißes nicht mehr vorhanden. Durch unterschiedliche Codierung von in unterschiedlichen Bereichen und unterschiedlichen Tiefen angebrachten Transpondern 4 kann somit auf sehr einfache Weise eine Verschleißüberwachung erfolgen.

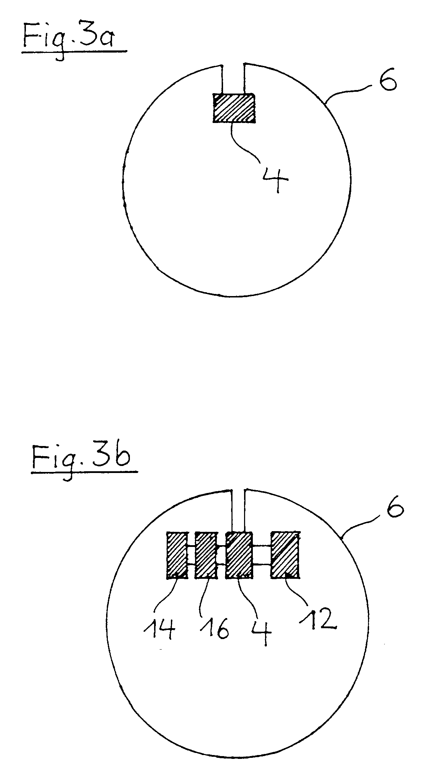

Außer über fest programmierte Kennungen verfügen die Transponderchips über E²PROM-Speicher 12, die in der Lage sind, noch weitere, löschbare Informationen zu speichern (Fig. 3b). Diese weiteren Informationen sind von der ortsfesten Sende- und Empfangseinrichtung 4 übertragbar, abfragbar und löschbar.

Bereits mit einem einzigen in den Fördergurt 2 einvulkanisierten, beschreibbaren und auslesbaren Transponderchip 4 (mit E²PROM-Speicher 12) kann das Zählen von Umläufen des Fördergurtes 2 (entsprechend dem Durchlauf unter einer ortsfesten Sende- und Empfangseinrichtung 8) durchgeführt werden: Bei jedem Durchlauf wird ein entsprechender Zähler jeweils um eine Einheit erhöht.

Gleichzeitig mit der Information über die Anzahl von Umläufen sind auch weitere Daten, wie z. B. Uhrzeit und/oder Datum, auf den Chip 12 übertragbar. Damit läßt sich z. B. ein Protokoll über die Betriebsweise des Fördergurtes 2 erstellen, was im Zusammenhang mit Gewährleistungszusagen von Interesse sein kann.

Darüber hinaus wird vorgeschlagen, daß der Transponderchip 4 über weitere Einheiten, wie z. B. Temperaturbewertungseinheit mit Temperatursensor 14, Druckbewertungseinheit mit Drucksensor (jeweils in Verbindung mit A/D-Wandler 16) verfügt (Fig. 3b). Die so gewonnenen Informationen können in dem E²PROM-Speicher 12 zwischengespeichert und beim überfahren einer ortsfesten Sende- und Empfangseinrichtung 8 ebenfalls abgefragt bzw. ausgelesen und in einer (zentralen) Auswerteeinheit ausgewertet werden.

Bei den an die Transsponder 4 anschließbaren oder in die Transponder 4 integrierbaren Sensoreinheiten 14 handelt es sich bevorzugt um solche Typen, die ohne besondere Energieversorgung arbeiten, wie z. B. Piezokristalle zur Druckerfassung, Thermoelemente zur Temperaturerfassung usw..

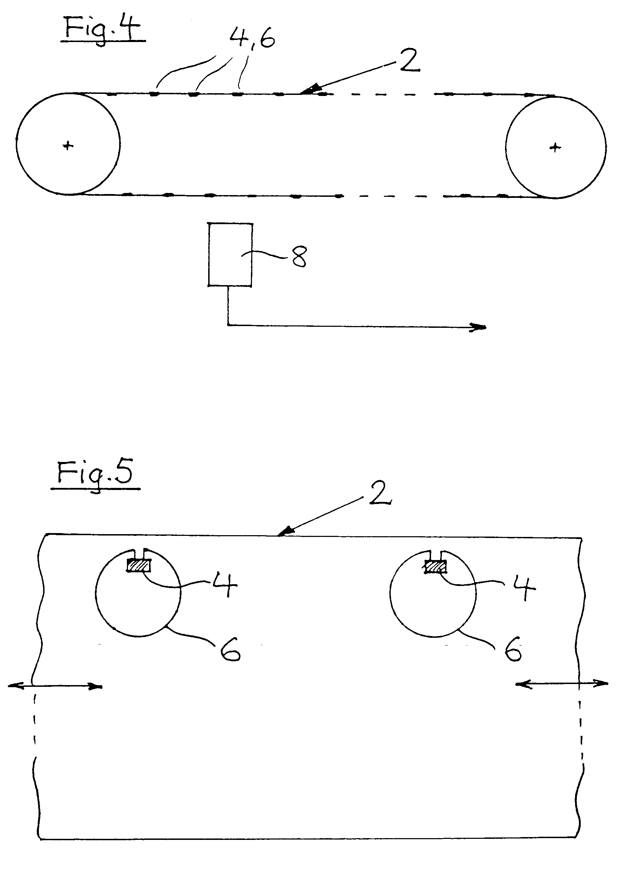

Vorzugsweise werden die Sender 4 in etwa gleichen Abständen in oder auf dem Fördergurt 2 angebracht (Fig. 4). So kann man praktisch von jedem beliebigen Punkt des Gurtes 2 die Daten, wie z. B. Temperatur, Beladungszustand usw., erfassen.

Die genannten Sensoren 14 müssen nicht zwangsläufig mit dem Transponder 4 bzw. mit der Informationsauswerteeinheit auf dem Transponderchip 4 verbunden bzw. in diesen integriert sein. Es ist auch denkbar, daß Daten nicht im Fördergurt 2 sondern aus seiner Umgebung erfaßt und dann für eine spätere Abfrage im Speicherchip 12 gespeichert werden.

So können beispielsweise Produktionsdaten, wie eine Meterangabe, das Fertigungsdatum, die Vulkanisationstemperatur des Gurtes 2 oder eine Verbindung, der Name des Herstellers oder ähnliches außerhalb des Gurtes 2 erfaßt werden. Dies kann über entsprechende Datengeber (Sensoren 14), aber auch einfach über eine Tastatur an der (ortsfesten) Sende- und Empfangseinrichtung 8 erfolgen.

Sowohl die feste Programmierung des Transponders 4 als auch die löschbare Programmierung des E²PROM-Speichers 12 mit diesen oder ähnlichen Daten kann auch erfolgen, bevor die Chips in den Fördergurt 2 einvulkanisiert worden sind.

Ein solches System kann beispielsweise der Qualitätskontrolle oder der fälschungssicheren Markierung von Fördergurten dienen.

Bei ausgedehnten Bandstraßen wird man auch mehrere ortsfeste Einrichtungen 4 vorsehen, die vorzugsweise an den wichtigen Punkten der Fördergurte (z. B. in der Nähe von übergabepunkten) installiert sind, und die dann wiederum mit einer zentralen Auswerteeinheit, z. B. per Funk, in Verbindung stehen.

Diese (ortsfesten) Einrichtungen 4 können auch mit Sensoren 14 verbunden sein, die Meßwerte aufnehmen und an den Transponder 4 im Gurt 2 weiterleiten, wo sie für eine spätere Abfrage speicherbar sind.

### Bezugszeichenliste

- 2: Fördergurt
- 4: Sender
- 6: Datenträgerspule
- 8: ortsfeste Sende- und Empfangseinrichtung
- 10: Wicklung der ortfesten Einrichtung
- 12: E²PROM-Speicher
- 14: Sensor
- 16: Analog/Digital-Wandler

## Patentansprüche

1. Verfahren zur induktiven Überwachung eines Fördergurtes (2),
- mit in Gurtrichtung in Abständen aufeinanderfolgend eingelegten Transponderchips (4), die jeweils an eine als Antenne wirken Datenträgerspule (6) angeschlossen sind, und
- mit mindestens einer außerhalb des Fördergurtes (2) ortsfest angeordneten Sende- und Empfangseinrichtung (8), wobei die Transponderchips (4) ihre Spannungsversorgung durch induktive Kopplung der Datenträgerspule (6) an eine als Primärspule wirkenden, fortlaufend erregten Wicklung (10) der außerhalb des Fördergurtes (2) ortsfest angebrachten Sende- und Empfangseinrichtung(en) (8) erhalten, und wobei
- während der Spannungsversorgung Dauersignale von den Transponderchips (4) mit jeweils individuellen Kennungen in umgekehrter Richtung induktiv an die Wicklung (10) einer der ortsfesten Sende- und Empfangseinrichtung(en) (8) übertragen werden,
**dadurch gekennzeichnet,**
dass während der Spannungsversorgung in die Transponderchips (4) neben der individuellen Kennung weitere Informationen eingegeben bzw. von den Transponderchips (4) abgefragt werden, wozu die Transponderchips (4) über einen EEPROM-Speicher verfügen.

2. Überwachungsanordnung an einem Fördergurt (2)
- mit in Gurtrichtung in Abständen aufeinanderfolgend eingelegten Sendern (4) und
- mit mindestens einer außerhalb des Fördergurtes (2) ortsfest angeordneten Sende- und Empfangseinrichtung (8), wobei die Sender (4) ihre Spannungsversorgung durch induktive Kopplung an eine als Primärspule wirkenden, fortlaufend erregten Wicklung (10) der außerhalb des Fördergurtes (2) ortsfest angebrachten Sende- und Empfangseinrichtung(en) erhalten, wobei
- die Sender (4) mit integrierten miniaturisierten Datencodeträgern versehene Transponderchips sind, denen jeweils eine individuelle Kennung einprogrammiert ist, und an die jeweils eine als Antenne wirkende Datenträgerspule (6) angeschlossen ist, über die während der Spannungsversorgung Dauersignale mit der jeweils individuellen Kennung in umgekehrter Richtung induktiv an die Wicklung (10) einer der ortsfesten Sende- und Empfangseinrichtungen (8) übertragbar sind, dadurch gekennzeichnet, dass die Sender (4) über EEPROM-Speicher (12) verfügen, in denen außer ihrer jeweils individuell einprogrammierten Kennung weitere löschbare Informationen speicherbar sind, wobei diese Informationen von der ortsfesten Sende- und Empfangseinrichtung (8) übertragbar und abfragbar sind.

3. Überwachungsanordnung nach Anspruch 2, dadurch gekennzeichnet, dass in den Transponderchips (4) weitere Einheiten, wie Temperaturbewertungseinheit mit Temperatursensor (14), Druckbewertungseinheit mit Drucksensor (jeweils in Verbindung mit A/D- Wandlern (16)) enthalten sind, deren Daten neben den jeweiligen Kennungen von der ortsfesten Sende- und Empfangseinrichtung (8) abfragbar und/oder zu ihr übermittelbar sind.

4. Überwachungsanordnung nach einem der Ansprüche 2 bis 3, dadurch gekennzeichnet, dass die in Fördergurtrichtung in Abständen aufeinanderfolgend eingelegten Sender (4) äquidistant zueinander angeordnet sind.

5. Überwachungsanordnung nach einem der Ansprüche 2 bis 4, dadurch gekennzeichnet, dass die Amplitude der empfangenen Energie mit den von den Transpondern zu sendenden Signalen modulierbar ist.

6. Überwachungsanordnung nach einem der Patentansprüche 2 bis 5, gekennzeichnet durch Kopplung der Sende- und Empfangseinrichtung (8) mit Sensoren (14) oder anderen Einrichtungen zur Erfassung von Daten, welche an den EEPROM-Speicher (12) des Transponders (4) übertragbar und wieder abfragbar sind.

## Claims

1. Method of inductively monitoring a conveyor belt (2),
- using transponder chips (4), which are inserted at successive spacings from one another, when viewed with respect to the belt direction, and which each communicate with a data carrier coil (6), which acts as the aerial, and
- using at least one transmitting and receiving arrangement (8), which is fixedly disposed externally of the conveyor belt (2), the transponder chips (4) receiving their voltage supply by inductively coupling the data carrier coil (6) to a continuously excited winding (10) of the transmitting and receiving arrangement(s) (8), which are fixedly mounted externally of the conveyor belt (2), said winding acting as the primary coil, and
- continuous signals being transmitted during the voltage supply by the transponder chips (4) in the reverse direction inductively to the winding (10) of one of the fixed transmitting and receiving arrangement(s) (8), each chip having individual identification markings,
characterised in that further information is input during the voltage supply in the transponder chips (4) in addition to the individual identification marking, or respectively scanned by the transponder chips (4), for which purpose the transponder chips (4) have an EEPROM memory.

2. Monitoring arrangement for a conveyor belt (2),
- having transmitters (4), which are inserted at successive spacings from one another, when viewed with respect to the belt direction, and
- having at least one transmitting and receiving arrangement (8), which is fixedly disposed externally of the conveyor belt (2), the transmitters (4) receiving their voltage supply by being inductively coupled to a continuously excited winding (10) of the transmitting and receiving arrangement(s), which are fixedly mounted externally of the conveyor belt (2), said winding acting as the primary coil,
- the transmitters (4) being transponder chips which are provided with integrated miniaturised data code carriers, an individual identification marking being programmed into each of said chips and communicating with the actual data carrier coil (6) which acts as the aerial, and via which continuous signals are transferable during the voltage supply in a reverse direction inductively to the winding (10) of one of the fixed transmitting and receiving arrangements (8), each signal having an individual identification marking, characterised in that the transmitters (4) have EEPROM memories (12), in which additional erasable information is storable as well as their actual individually programmed-in identification marking, this information being transferable and scannable by the fixed transmitting and receiving arrangement (8).

3. Monitoring arrangement according to claim 2, characterised in that additional units, such as temperature evaluating unit with temperature sensor (14), pressure evaluating unit with pressure sensor (each in conjunction with analog-to-digital converters (16)), are contained in the transponder chips (4), the data of said additional units as well as the actual identification markings being scannable by the fixed transmitting and receiving arrangement (8) and/or being transferable to said transmitting and receiving arrangement.

4. Monitoring arrangement according to one of claims 2 to 3, characterised in that the transmitters (4), which are inserted at successive spacings from one another when viewed with respect to the direction of the conveyor belt, are disposed equidistant from one another.

5. Monitoring arrangement according to one of claims 2 to 4, characterised in that the amplitude of the energy received can be modulated with the signals which are to be transmitted by the transponders.

6. Monitoring arrangement according to one of claims 2 to 5, characterised by coupling the transmitting and receiving arrangement (8) to sensors (14) or other arrangements for picking-up data which is transferable to the EEPROM memory (12) of the transponder (4) and scannable again.

## Revendications

1. Procédé de contrôle par induction d'un ruban transporteur (2),
◆ au moyen de microplaquettes de transpondeur (4) insérées à distance les unes à la suite des autres dans la direction du ruban et dont chacune est raccordée à une bobine de support de données (6) agissant en antenne et
◆ au moyen d'au moins un dispositif émetteur et récepteur (8) placé en position fixe à l'extérieur du ruban transporteur (2), les microplaquettes de transpondeur (4) recevant leur alimentation en tension par couplage inductif de la bobine de support de données (6) à un enroulement (10) excité en continu, agissant en bobine primaire et faisant partie du ou des dispositif(s) émetteur(s) et récepteur(s) (8) placé(s) en position fixe à l'extérieur du ruban transporteur (2) et
◆ dans lequel, pendant l'alimentation en tension, des signaux continus sont transmis par les microplaquettes de transpondeur (4), avec des signes distinctifs individuels, en sens inverse, par induction, à l'enroulement (10) du ou de l'un des dispositifs émetteurs et récepteurs (8) occupant une position fixe,
caractérisé
◆ en ce que, pendant l'alimentation en tension, d'autres informations sont entrées dans les microplaquettes de transpondeur (4) en plus du signe distinctif individuel ou sont extraites des microplaquettes de transpondeur (4) et, à cette fin, les microplaquettes de transpondeur (4) disposent d'une mémoire EEPROM.

2. Dispositif de contrôle placé sur un ruban transporteur (2),
◆ comprenant des émetteurs (4) insérés à distance les uns à la suite des autres dans la direction du ruban et
◆ comprenant au moins un dispositif émetteur et récepteur (8) placé en position fixe à l'extérieur du ruban transporteur (2), les émetteurs (4) recevant leur alimentation en tension par couplage inductif à un enroulement (10) excité en continu, agissant en bobine primaire et faisant partie du ou des dispositif(s) émetteur(s) et récepteur(s) placé(s) en position fixe à l'extérieur du ruban transporteur (2),
◆ les émetteurs (4) étant des microplaquettes de transpondeur équipées de supports miniaturisés intégrés de codes de données, dans chacune desquelles un signe distinctif individuel est entré dans la programmation et à chacune desquelles est connectée une bobine de support de données (6) agissant en antenne et par laquelle des signaux continus, ayant chacun le signe distinctif individuel, en sens inverse, peuvent être transmis par induction pendant l'alimentation en tension à l'enroulement (10) de l'un des dispositifs émetteurs et récepteurs (8) occupant une position fixe, caractérisé en ce que les émetteurs (4) disposent de mémoires EEPROM (12) dans lesquelles d'autres informations effaçables peuvent être entrées en plus du signe distinctif individuel entré dans la programmation, ces informations pouvant être transmises et extraites par le dispositif émetteur et récepteur (8) occupant une position fixe.

3. Dispositif de contrôle selon la revendication 2, caractérisé en ce que les microplaquettes de transpondeur (4) contiennent d'autres modules, tels qu'un module d'évaluation de la température comprenant un détecteur de température (14), un module d'évaluation de la pression comprenant un détecteur de pression (chacun conjointement avec des convertisseurs analogique/numérique (16)), dont les données peuvent être extraites, en plus des signes distinctifs particuliers, par le dispositif émetteur et récepteur (8) occupant une position fixe et/ou peuvent lui être transmises.

4. Dispositif de contrôle selon l'une des revendications 2 et 3, caractérisé en ce que les émetteurs (4) insérés à distance les uns à la suite des autres dans la direction du ruban transporteur sont placés à équidistance.

5. Dispositif de contrôle selon l'une des revendications 2 à 4, caractérisé en ce que l'amplitude de l'énergie reçue est modulable par les signaux devant être émis par les transpondeurs.

6. Dispositif de contrôle selon l'une des revendications 2 à 5, caractérisé par le couplage du dispositif émetteur et récepteur (8) aux détecteurs (14) ou à d'autres dispositifs de détection de données qui peuvent être transmises à la mémoire EEPROM (12) du transpondeur (4) ou en être à nouveau extraites.
